# EUROPÄISCHE PATENTSCHRIFT

(11) **EP 2 683 477 B1**
(45) Veröffentlichungstag und Bekanntmachung des Hinweises auf die Patenterteilung: **17.06.2015**
(21) Anmeldenummer: 12747989.7
(22) Anmeldetag: 25.07.2012
(51) Int. Cl.: B01J 23/12, B01J 37/00, B01J 37/08, B01J 37/12, B01J 35/02, B01J 35/04, B01J 35/10, C04B 35/51

(54) **VERFAHREN ZUR HERSTELLUNG EINES URANOXID-KATALYSATORKÖRPERS**
METHOD FOR PRODUCING A CATALYST CONTAINING URANIUM OXIDE AS ACTIVE COMPONENT
PROCÉDÉ POUR PRODUIRE UN OXYDE D'URANIUM SOUS FORME DE CATALYSEUR CONTENANT UN COMPOSANT ACTIF

(30) Priorität: 17.08.2011 DE 102011081074
(43) Veröffentlichungstag der Anmeldung: 15.01.2014
(73) Patentinhaber: AREVA GmbH, 91052 Erlangen (DE)
(72) Erfinder: ZEMEK, Martin, CH-5314 Kleindöttingen (CH); LANSMANN, Volker, 91085 Weisendorf (DE)
(74) Vertreter: Schlögl, Markus
(86) Internationale Anmeldenummer: PCT/EP2012/064583
(87) Internationale Veröffentlichungsnummer: WO 2013/023890

(56) Entgegenhaltungen:
- WO-A1-2009/010167
- DE-A1-102009 013 905
- GB-A- 1 258 413
- GB-A- 1 351 803

## Beschreibung

Die Erfindung betrifft ein Verfahren zur Herstellung eines Uranoxid als aktive Komponente enthaltenden Katalysators. Uranoxide können für eine Reihe von Oxidationsreaktionen als Oxidationskatalysator eingesetzt werden, beispielsweise, wie DE 10 2007 033 114 A1 zu entnehmen ist, für die Komplettoxidation von flüchtigen organischen Verbindungen, von Kohlenmonoxid zu Kohlendioxid, von Isobuten zu Acrolein und von Chlorwasserstoff zu Chlor. Vielfach werden Katalysatoren, auch Uranoxidkatalysatoren, hergestellt, indem auf einen Trägerkörper die aktive Komponente in flüssiger Form, etwa als wässrige Suspension eines Präkursors wie etwa Uranyldihydrat oder in der Gasphase mit CVD Chemical vapor deposition) oder PVD (physical vapor deposition) aufgebracht wird.

Aufgabe der Erfindung ist es, ein alternatives Herstellungsverfahren für einen Uranoxidkatalysator anzugeben.

Diese Aufgabe wird durch ein Verfahren nach Anspruch 1 erfüllt. Der Erfindung liegt dabei der allgemeine Gedanke zugrunde, aus Uranoxid einen Sinterkörper mit hoher offener Porosität herzustellen. Im Gegensatz zu den bekannten Herstellungsverfahren, bei denen zunächst geeignete Trägerkörper z.B. aus Al₂O₃ bereitgestellt und diese mit der aktiven Komponente versehen werden müssen, wird erfindungsgemäß ein Katalysator erzeugt, der Trägerkörper und aktive Komponente in sich vereinigt. Es entfällt der Aufwand für die Herstellung und für das Aufbringen der aktiven Komponente auf einen Träger. Hinzu kommt, dass Uranmaterial der hier in Rede stehenden Art schwach radioaktiv ist, so dass hinsichtlich der Entsorgung beispielsweise von überschüssigen, oder unbrauchbar gewordenen Präkursor-Suspensionen oder bei der Herstellung eines Präkursors anfallenden Abfalls kein erhöhter, die Herstellung verteuernder Aufwand betrieben werden müsste.

In einem ersten Sinterprozess wird UO₂₊ₓ-Pulver (bei x≤0,7), vorzugsweise solches, welches durch eine chemische Umwandlung von UF₆, UO₃, UN, UNH, U₃O₈ oder UF₄ - in einem trockenen oder nassen Konversionsverfahren - gewonnen wurde, zu einem UO_{2+y}-Zwischenprodukt (bei y≤0.25) gesintert (Schritt a). Das UO₂₊ₓ-Pulver wird dabei vorzugsweise ohne weitere Zusätze, beispielsweise von Metalloxiden wie Al₂O₃ oder ZrO₂ verwendet, kann jedoch bis zu 50Gew.% solcher Zusätze enthalten. Das Zwischenprodukt ist dabei ein Formkörper mit beliebiger Struktur. Denkbar ist aber auch, das UO₂₊ₓ-Pulver ohne vorherige Kompaktierung zu sintern, was aber aus verfahrenstechnischen Gründen unpraktisch wäre. Zweckmäßigerweise wird ein Zwischenprodukt erzeugt, das die gleiche Form aufweist wie das spätere Endprodukt, also der fertige Katalysatorkörper. Zum Verpressen eines Zwischenprodukt-Rohlings und zu dem weiter unten beschriebenen Verpressen des Rohlings des Katalysatorkörpers können dann ein und dieselbe Pressvorrichtung verwendet werden.

In einem nachfolgenden Schritt b) wird das gesinterte Zwischenprodukt mit Sauerstoff behandelt, wobei UO_{2+y} zu U₃O_{8-z} (bei z≤1)oxidiert wird. Dabei entsteht aus dem Zwischenprodukt ein feines U₃O_{8-z}-Pulver mit einer mittleren Partikelgröße beispielsweise im Bereich von 5 µm bis 10 µm, bzw. typischerweise im Bereich von 1 bis 30 µm, dessen Sinteraktivität gegenüber dem Ausgangs-UO₂-Pulver verringert ist. Die Pulverkörner des Ausgangs UO₂-Pulver, das beispielsweise Partikelgrößen von 5 µm bis 500 µm aufweisen kann, sind nämlich jeweils aus einer Vielzahl kleiner Kristallite mit Kristallitgrößen im Bereich beispielsweise von 50 nm bis 300 nm gebildet, was eine relativ hohe Sinteraktivität bedeutet, welche die Herstellung dichter, eine geringe Porosität aufweisender Sinterkörper begünstigt. Bei dem erfindungsgemäßen Verfahren verschmelzen während des ersten Sinterprozesses die anfänglich vorhandenen Kristallite zu größeren Kristalliten/Körnern, so dass nach dem ersten Sinterprozess und ebenso nach der Oxidation im Schritt b) bis zu 600 fach größere Kristallite, nämlich solche mit Kristallitgrößen von 1 µm bis 3 µm vorliegen, was im Hinblick auf eine hohe Porosität bzw. geringe Dichte des damit herzustellenden Sinterkörpers günstiger ist. Ein weiterer wesentlicher Effekt dürfte aber auch darin liegen, dass die Dichte von U₃O_{8-z}, das eine orthorhombische Kristallstruktur aufweist kleiner ist als jene des kubischen UO_{2+y}, so dass es infolge der Oxidation zu einer Volumenvergrößerung der ursprünglichen UO_{2+y}-Partikel kommt, bei der die Körner eine Vielzahl von Rissen bekommen und in kleinere Bestandteile zerlegt werden. Dadurch entsteht eine Vielzahl von Hohlräumen im Partikel. Dies hat zur Folge, dass im zweiten Sinterprozess die Hohlräume zumindest teilweise erhalten bleiben und ein Katalysatorkörpers mit hoher offener Porosität entsteht.

In den Unteransprüchen sind vorteilhafte Weiterbildungen des oben beschriebenen Verfahrens angegeben.

Die Erfindung wird nun unter Bezugnahme auf die beigefügten Zeichnungen näher erläutert. Es zeigen jeweils in stark schematisierter Form:

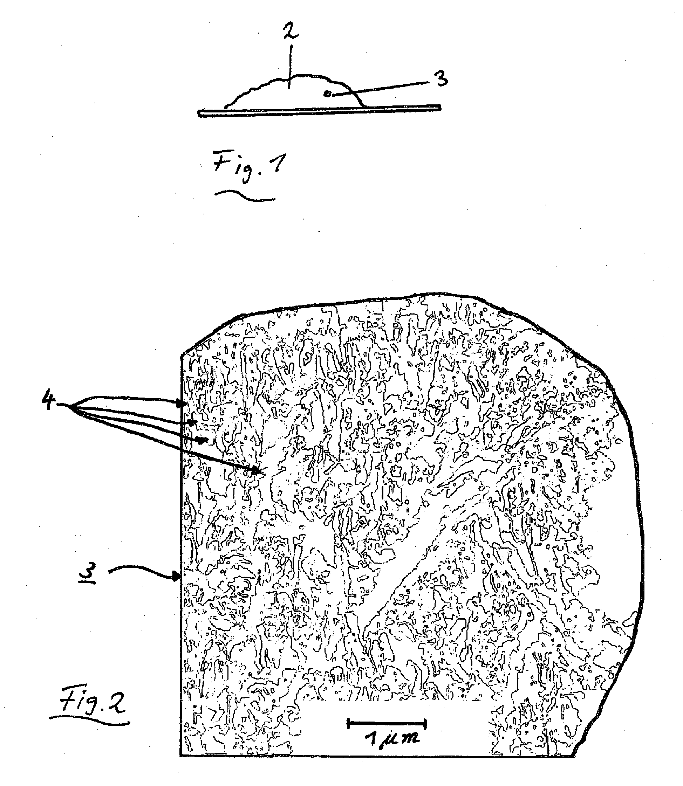

Fig. 1 ein UO₂₊ₓ-Pulver (bei x≤0.7), das als Ausgangspulver für ein erfindungsgemäßes Verfahren dient,
Fig. 2 ein UO₂₊ₓ-Partikel des Ausgangspulvers mit Kristalliten
Fig. 3 die Erzeugung von Rohlingen eines UO_{z+x}-zwischenprodukts bzw. eines U₃O_{8-z}-Katalysatorkörpers,
Fig. 4 die Oxidation eines UO_{2+y}-Zwischenprodukts (bei y≤0.25) mit Sauerstoff,
Fig. 5 ein aus einem UO_{2+y}-Korn durch Oxidation entstandenes U₃O_{8-z}-Partikel (bei z≤1).

Zur Herstellung eines erfindungsgemäßen, beispielsweise zylinderförmigen Katalysatorkörpers 1 wird UO₂-Pulver 2 als Ausgangspulver, vorzugsweise ein solches verwendet, welches durch nasschemische oder trockenchemische Konversion aus Uranhexafluorid (UF₆), Urantrioxid (UO₃), Uranyl-Nitrat (UN), Uranyl-Nitrat-Hexahydrat (UNH), Triuranoctoxid (U₃O₈) oder Urantetrafluorid (UF₄) gewonnen wurde. Bekannte Verfahren sind nach ihren Zwischenstufen benannt, beispielsweise das AUC-Verfahren (Ammonium Uranylcarbonat) oder das ADU-Verfahren (Ammonium-Diuranat). Bei einem trockenchemischen Konversionsverfahren wird UF₆ mit Wasser und Wasserstoff in der Gasphase direkt zu Urandioxid umgesetzt. Ein UO₂₊ₓ-Pulver der genannten Art weist üblicherweise Pulverpartikel 3 mit einer mittleren Partikelgröße von 5 µm bis 500 µm, vielfach jedoch im Bereich von 10 µm bis 150 µm auf. Die Pulverpartikel selbst sind wiederum Agglomerate einer Vielzahl von Kristalliten 4 mit einer Größe etwa im Bereich von 50 nm bis 300 nm. Das einzelne UO₂₊ₓ-Partikel 3 ist somit quasi ein Gefüge aus einer Vielzahl unterschiedlich orientierter Kristallite.

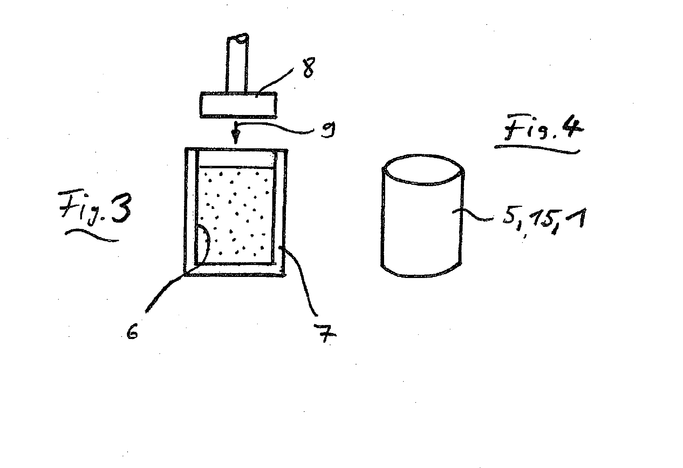

Zunächst wird in einem ersten Verfahrensschritt (Schritt a) das UO₂₊ₓ-Pulver, in einem ersten Sinterprozess gesintert. Vorzugsweise wird abgereichertes UO₂₊ₓ verwendet, welches bei der Urananreicherung im Zuge der Herstellung von Kernbrennstoffpellets für Kernkraftwerke anfällt. Das UO₂₊ₓ-Pulver 2, wird zu einem z.B. zylinderförmigen Rohling 5 gepresst, wobei es zu diesem Zweck in eine einen zylindrischen Hohlraum 6 aufweisende Matrize 7 eingefüllt und mit einem Stempel 8, der in Richtung des Pfeils 9 in die Matrize 7 eingeführt wird, auf eine Dichte typischerweise von 5 bis 7 g/cm³ verdichtet wird (Fig. 3). Anwendbar sind auch andere Verdichtungsverfahren, wie z.B. bi-axiales Pressen, isostatisches Pressen usw., sowie entsprechend andere Verdichtungsgrade. Die theoretische Dichte von UO₂₊ₓ beträgt ca. 11 g/cm³. Die Sinterung des Rohlings 5 wird in einem Ofen (nicht gezeigt) so durchgeführt, dass UO_{2+y} (bei y≤0.25) erhalten wird. Um dies zu gewährleisten wird z.B. in einer H₂ enthaltenden Atmosphäre bei 1500°C bis 1800°C oder in einer CO₂ enthaltenden Atmosphäre bei 1100°C bis 1200°C gesintert. Nach dem Sintern liegt dann als Zwischenprodukt 14 ein beispielsweise zylinderförmiger UO_{2+y}-Sinterkörper vor.

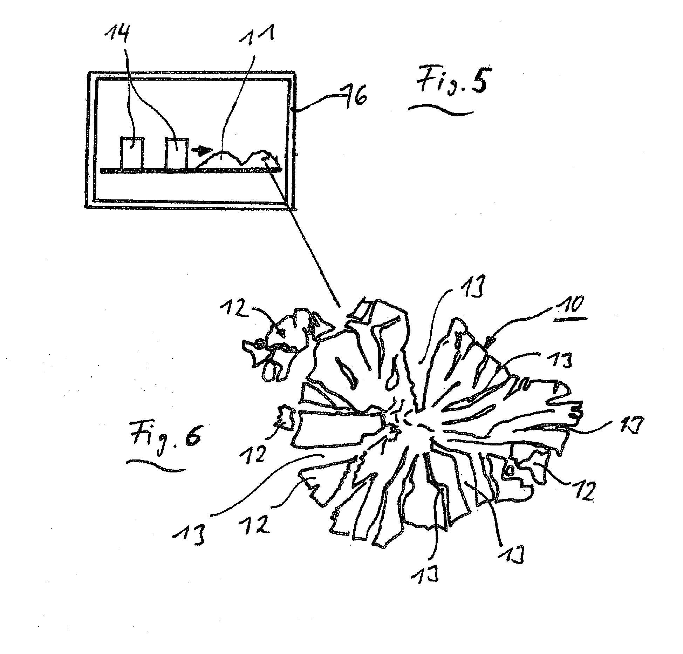

In einem sich anschließenden Verfahrensschritt (Schritt b) wird das Zwischenprodukt 14 zu U₃O_{8-z} (bei z≤1) in einem Ofen 16, etwa dem zum ersten Sinterprozess benutzten Ofen gleich im Anschluss an die Sinterung, oxidiert, wobei es zu U₃O_{8-z}-Pulver 11 zerfällt. Die Form des Zwischenprodukts 14 spielt daher keine Rolle. Wenn für das Zwischenprodukt 14 die gleiche Form gewählt wird wie für das Endprodukt, den Katalysatorkörper 1, kann für das Verpressen der jeweiligen Rohlinge ein und dieselbe Vorrichtung (Matrize 7, Stempel 8) verwendet werden. Der Effekt des ersten Sinterprozesses beruht darin, dass das in der anschließenden Oxidation erhaltene U₃O_{8-z}-Pulver eine geringere Sinteraktivität aufweist, was die Erzeugung weniger dichter, hohe Porositäten aufweisender Sinterkörper fördert. Ein weiterer Effekt ist darin zu sehen, dass U₃O₈ mit 8,38 g/cm³ eine geringere Dichte aufweist als UO₂, was dazu führt, dass die aus UO_{2+y} gebildeten U₃O_{8-z}-Partikel 10 expandieren, wobei sie teilweise in Bruchstücke 12 zerfallen und sich in ihnen Hohlräume 13 etwa in Form von Rissen bilden (siehe Fig. 5). Die Oxidation erfolgt typischerweise bei Temperaturen von 300°C bis 600°C innerhalb einer Zeitdauer von beispielsweise 3 Stunden.

In einem weiteren Verfahrensschritt (Schritt c) wird das U₃O₈-Pulver 11, wie oben beschrieben, zu Rohlingen 15 mit einer Dichte typischerweise von 5 g/cm³ bis 6 g/cm³ und einer der Form des späteren Katalysatorkörpers 1 entsprechenden Form z.B. uni-axial verpresst. Anwendbar sind auch andere Verdichtungsverfahren, wie z.B. bi-axiales Pressen, isostatisches Pressen usw., sowie andere Verdichtungsgrade. Der Katalysatorkörper 1 ist z.B. ein Zylinder mit einem Durchmesser von 7 mm und einer Höhe von 10 mm. Dem U₃O_{8-z}-Pulver kann vor dem Verpressen ein Presshilfsmittel, z.B. 0,2 Gewichtsprozent Polyethylenwachs zugefügt werden. Ein Presshilfsmittel kann auch bei der Herstellung des Zwischenprodukts 14 eingesetzt werden.

Die auf die o.g. Weise erhaltenen Rohlinge 15 werden in einem zweiten Sinterprozess (Schritt d) gesintert, wobei dies in einer Atmosphäre erfolgt, in der der U₃O₈-Zusamensetzungsbereich unverändert bleibt. Eine Atmosphäre welche dies gewährleistet enthält Sauerstoff oder besteht aus Luft, wobei während der Sinterung eine Temperatur von 1000°C bis 1300°C eingehalten wird. Am Ende wird ein Katalysatorkörper 1 mit einen hohen offenen Porosität und dementsprechend einer großen inneren Oberfläche, an der katalytische Reaktionen stattfinden können, erhalten.

Auf die oben beschriebene Art hergestellte U₃O_{8-z}-Katalysatorkörper 1 sind an Luft bis ca. 1000°C bis 1200°C stabil. Für einen Einsatz unter reduzierenden Bedingungen kann ein Katalysatorkörper bei Temperaturen von 300°C bis 1000°C, vorzugsweise von 400°C bis 600°C in einer H₂-haltigen Atmosphäre, z.B. H₂, H₂-N₂, H₂-Ar etc. reduktiv behandelt werden, um U₃O_{8-z} in UO₂ umzuwandeln. UO₂ ist zwar an Luft nur bis ca. 120°C, unter reduzierenden Bedingungen aber bis ca. 1000°C als poröser Körper stabil.

### Beispiele:

Auf die oben geschilderte Art und Weise hergestellte zylindrische UO₂-Zwischenprodukte 14 wurden für 3 Stunden bei 450°C oxidiert. Das dabei entstandene U₃O₈-Pulver wurde mit 0,2% Presshilfsmittel (PE-Wachs) vermischt und zu zylinderförmigen Rohlingen 15 mit einer Dichte von 5 g/cm³ bis 5,5 g/cm³ und einem Gewicht von 1 g verpresst. Die Rohlinge 15 wurden dann in einem Ofen mit Luft als Sinteratmosphäre eine Stunde lang bei 1280°C (Charge A) bzw. bei 1100°C (Charge B) gesintert.

Dabei konnten Katalysatorkörper 1 mit folgenden Eigenschaften erhalten werden:

| | Charge A | Charge B |
|---|---|---|
| Dichte [g/cm³] | 7,15- 7,20 | 6, 67 - 6,97 |
| Offene Porosität [%] | 91 - 92 | 92 - 96 |
| Spezifische Oberfläche [m²/kg] | 140 | 250 |
| Mittlere Korngröße [µm] | 4,2 | 2,2 |

Die offene Porosität ist angegeben als Anteil an der Gesamtporosität, wobei die sich Gesamtporosität (Volumen-%) ergibt aus: Gesamtporosität = (1 - Dichte / theoretische Dichte) x 100. Die theoretische Dichte von U02 ist 10,96 g/cm³, die von U₃O₈ ist 8,38 g/cm³.

## Patentansprüche

1. Verfahren zur Herstellung eines Uranoxid-Katalysatorkörpers, mit folgenden Schritten:
a) UO₂₊ₓ-Pulver (2) (mit x≤0,7) mit einer Reinheit von mindestens 50% wird in einem ersten Sinterprozess zu einem UO_{2+y}-Zwischenprodukt (14) (mit y≤0,25) gesintert,
b) das UO_{2+y}-Zwischenprodukt (14) wird mit Sauerstoff oxidiert und dabei in ein U₃O_{8-z}-Pulver (11) (mit z≤1) umgewandelt,
c) das U₃O_{8-z}-Pulver (11) wird zu einem Rohling (15) mit einer dem späteren Katalysatorkörper (1) entsprechenden Form gepresst, und
d) der Rohling (15) wird in einem zweiten Sinterprozess in einer Sauerstoff enthaltenden Sinteratmosphäre bei mindestens 900 °C gesintert.

2. Verfahren nach Anspruch 1, **dadurch gekennzeichnet, dass** im Schritt a) ein UO₂₊ₓ-Pulver (2) verwendet wird, welches durch Konversion von UF₆, UO₃, UNH, U₃O₈ oder UF₄ erhalten wurde.

3. Verfahren nach Anspruch 1 oder 2, **dadurch gekennzeichnet, dass** in Schritt a) ein UO₂₊ₓ-Pulver (2) verwendet wird, dessen Pulverpartikel eine mittlere Korngröße von 5 µm bis 500 µm aufweisen.

4. Verfahren nach Anspruch 3, **gekennzeichnet durch** die Verwendung eines UO₂₊ₓ-Pulvers (2) mit einer mittleren Partikelgröße von 10 µm bis 150 µm.

5. Verfahren nach einem der vorhergehenden Ansprüche, **gekennzeichnet durch** die Verwendung eines UO₂₊ₓ-Pulvers (2), dessen Pulverpartikel (3) aus Kristalliten (4) mit einer mittleren Größe von 30 nm bis 300 nm gebildet sind.

6. Verfahren nach einem der vorhergehenden Ansprüche, **dadurch gekennzeichnet, dass** die Oxidation des UO_{2+y}-Zwischenprodukts (14) gemäß Schritt b) bei einer Temperatur von wenigstens 300°C erfolgt.

7. Verfahren nach Anspruch 6, **gekennzeichnet durch** eine Oxidation bei 400°C bis 500°C.

8. Verfahren einem der vorhergehenden Ansprüche, **dadurch gekennzeichnet, dass** der Rohling (15) des Katalysatorkörpers (1) bei 900°C bis 1300°C gesintert wird.

9. Verfahren nach einem der vorhergehenden Ansprüche, **dadurch gekennzeichnet, dass** nach Schritt d) der Katalysatorkörper (1) reduziert wird, um U₃O_{8-z} in UO₂ umzuwandeln.

10. Verfahren nach Anspruch 9, **dadurch gekennzeichnet, dass** die Reduktion bei einer Temperatur von 300°C bis 1000°C erfolgt.

11. Verfahren nach Anspruch 10, **dadurch gekennzeichnet, dass** die Reduktion bei einer Temperatur von 400°C bis 600°C erfolgt.

## Claims

1. Method for the production of a uranium oxide catalyst body, having the following steps:
a) UO₂₊ₓ powder (2) (where x≤0.7) having a purity of at least 50% is sintered in a first sintering process to form a UO_{2+y} intermediate product (14) (where y≤0.25),
b) the UO_{2+y} intermediate product (14) is oxidised with oxygen and thereby converted into a U₃O_{8-z} powder (11) (where z≤1),
c) the U₃O_{8-z} powder (11) is pressed to form a slug (15) having a shape corresponding to the later catalyst body (1), and
d) the slug (15) is sintered in a second sintering process at at least 900°C in a sintering atmosphere which contains oxygen.

2. Method according to claim 1, **characterised in that** in step a), a UO₂₊ₓ powder (2) is used which was obtained by conversion of UF₆, UO₃, UNH, U₃O₈ or UF₄.

3. Method according to claim 1 or 2, **characterised in that** in step a), a UO₂₊ₓ powder (2) is used, the powder particles of which have an average particle size from 5µm to 500µm.

4. Method according to claim 3, **characterised by** the use of a UO₂₊ₓ powder (2) having an average particle size from 10µm to 150µm.

5. Method according to one of the preceding claims, **characterised by** the use of a UO₂₊ₓ powder (2), the powder particles (3) of which are formed from crystallites (4) having an average size from 30nm to 300nm.

6. Method according to one of the preceding claims, **characterised in that** the oxidation of the UO_{2+y} intermediate product (14) according to step b) takes place at a temperature of at least 300°C.

7. Method according to claim 6, **characterised by** an oxidation at 400°C to 500°C.

8. Method according to one of the preceding claims, **characterised in that** the slug (15) of the catalyst body (1) is sintered at 900°C to 1300°C.

9. Method according to one of the preceding claims, **characterised in that** according to step d), the catalyst body (1) is reduced in order to convert U₃O_{8-z} into UO₂.

10. Method according to claim 9, **characterised in that** the reduction takes place at a temperature from 300°C to 1000°C.

11. Method according to claim 10, **characterised in that** the reduction takes place at a temperature from 400°C to 600°C.

## Revendications

1. Procédé de fabrication d'un corps catalyseur en oxyde d'uranium comportant les étapes suivantes :
a) on agglomère par frittage de la poudre d'UO₂₊ₓ (avec x ≤ 0,7) pure à au moins 50 % dans un premier processus de frittage pour obtenir un produit intermédiaire d'UO_{2+y} (14) (avec y ≤ 0,25),
b) on oxyde le produit intermédiaire d'UO_{2+y} (14) avec de l'oxygène tout en le transformant en une poudre d'U₃O_{8-z} (11) (avec z ≤ 1),
c) on presse la poudre d'U₃O_{8-z} (11) en une ébauche (15) dont la forme correspond au corps catalyseur (1) ultérieur, et
d) dans un deuxième processus de frittage, on fritte l'ébauche (15) à une température d'au moins 900°C dans une atmosphère de frittage contenant de l'oxygène.

2. Procédé selon la revendication 1, **caractérisé en ce qu'**à l'étape a), on utilise une poudre d'UO₂₊ₓ (2) que l'on a obtenue par conversion d'UF₆, d'UO₃, d'UNH, d'U₃O₈ ou d'UF₄.

3. Procédé selon la revendication 1 ou la revendication 2, **caractérisé en ce qu'**à l'étape a) on utilise une poudre d'UO₂₊ₓ (2) dont les particules ont une granulométrie moyenne de 5 µm à 500 µm.

4. Procédé selon la revendication 3, **caractérisé par** l'utilisation d'une poudre d'UO₂₊ₓ (2) d'une granulométrie moyenne de 10 µm à 150 µm.

5. Procédé selon l'une quelconque des revendications précédentes, **caractérisé par** l'utilisation d'une poudre d'UO₂₊ₓ (2) dont les particules (3) sont formées de cristallites (4) d'une taille moyenne de 30 nm à 300 nm.

6. Procédé selon l'une quelconque des revendications précédentes, **caractérisé en ce que** l'oxydation du produit intermédiaire d'UO_{2+y} (14) selon l'étape b) se produit à une température d'au moins 300°C.

7. Procédé selon la revendication 6, **caractérisé par** une oxydation à une température de 400°C à 500°C.

8. Procédé selon l'une quelconque des revendications précédentes, **caractérisé en ce que** l'ébauche (15) du corps catalyseur (1) est frittée à une température de 900°C à 1300°C.

9. Procédé selon l'une quelconque des revendications précédentes, **caractérisé en ce qu'**après l'étape d), le corps catalyseur (1) est réduit pour transformer l'U₃O_{8-z} en UO₂.

10. Procédé selon la revendication 9, **caractérisé en ce que** la réduction a lieu à une température de 300°C à 1000°C.

11. Procédé selon la revendication 10, **caractérisé en ce que** la réduction a lieu à une température de 400°C à 600°C.
